# EUROPÄISCHE PATENTANMELDUNG

(11) **EP 1 146 250 A2**
(43) Veröffentlichungstag der Anmeldung: **17.10.2001**
(21) Anmeldenummer: 01108714.5
(22) Anmeldetag: 06.04.2001
(51) Int. Cl.: F16G 11/00, F16G 11/04

(54) **Drahtseil mit Endhülse**

(30) Priorität: 12.04.2000 DE 20006747 U
(71) Anmelder: Pfeifer Holding GmbH & Co. KG, 87700 Memmingen (DE)
(72) Erfinder: Hoyer, Peter, Dipl.-Ing., 87751 Heimertingen (DE)
(74) Vertreter: Pfister, Helmut, Dipl.-Ing.

(57) **Zusammenfassung**

Es wird ein Drahtseil mit mindestens einer an einem Ende geordneter, den Seilzug übertragenden Hülse beschrieben, wobei die Litzen des Drahtseils etwas aufgedreht und im Gebrauchszustand in einer festen Masse eingebettet sind, und die Masse mit den Litzenenden einen Konus bildet, der in einer angepaßten konischen Bohrung der Hülse angeordnet ist und wobei eine begrenzte axiale Beweglichkeit zwischen dem Konus und der Hülse gegeben und der Seilzug über die Konusfläche in die Hülse eingeleitet ist.

## Beschreibung

Die Erfindung betrifft ein Drahtseil mit an mindestens einem Ende angeordneter, den Seilzug übertragender Hülse.

Es ist bekannt, auf ein Drahtseilende eine Hülse aufzupressen. Die Hülse besteht aus Metall, insbesondere auch aus Stahl. Für den Aufpreßvorgang sind geeignete Preßwerkzeuge notwendig, um eine sichere Verbindung der Hülse mit dem Seilende zu erreichen. In vielen Fällen, beispielsweise bei Reparaturen, besteht kein geeignetes Preßwerkzeug zur Verfügung. Es ist daher notwendig, das Seil beispielsweise aus einem Kran auszubauen, um in der Werkstätte die Hülse aufzubringen. Der Kran oder dergleichen steht längere Zeit still, was sehr nachteilig ist.

Der Erfindung liegt die Aufgabe zugrunde, ein Drahtseil mit einer Hülse vorzuschlagen und zwar in solcher Ausbildung, daß hohe Kräfte übertragbar sind, daß jedoch die Montage der Hülse am Drahtseil auch ohne Presse möglich ist.

Zur Lösung dieser Aufgabe geht die Erfindung von einem Drahtseil mit einer Hülse der eingangs eingegebenen Gattung aus. Erfindungsgemäß wird vorgeschlagen, daß die Litzen des Drahtseils etwas aufgedreht und einer im Gebrauchszustand festen Masse eingebettet sind, wobei die Masse mit den Litzenenden einen Konus bilden, der in einer angepaßten konischen Bohrung der Hülse angeordnet ist und wobei eine begrenzte axiale Beweglichkeit zwischen dem Konus und der Hülse gegeben und der Seilzug über die Konusfläche in die Hülse eingeleitet ist.

Das bloße Einbetten des Drahtseils bzw. auch der aufgedrehten Litzen in eine Einbettungsmasse allein führt in aller Regel nicht zum gewünschten Ergebnis. Für die Übertragung des Seilzugs stände nur eine Zylinderfläche in der jeweils benutzten Masse zur Verfügung, die durch Querkräfte beansprucht wird. Es besteht eine erhebliche Gefahr, daß die Litzen bzw. die Drähte nacheinander aus der Masse ausgezogen bzw. ausgerissen werden.

Durch den erfindungsgemäßen Vorschlag mit der konischen Ausbildung entstehen dem gegenüber radial wirkende Kräfte, die ähnlich wie bei einer aufgepreßten Stahlhülse eine feste, sichere Verbindung ergeben. Um auch bei Dauerbetrieb diese Klemmkräfte zu erreichen, ist die erfindungsgemäße Ausgestaltung gewählt worden. Wenn nämlich bei dieser Anordnung der Seilzug schwindet, schwindet zwar auch die radiale Kraft. Diese entsteht aber sofort wieder in voller Höhe, wenn das Seil beansprucht wird, so daß auch die Haltekräfte wieder voll gegeben sind. Günstig ist, wenn der kleinste Durchmesser der konischen Bohrung dem Seildurchmesser entspricht.

Die vorzugsweise elastisch verformbare Masse ist z. B. ein Kunststoff, insbesondere ein aushärtbarer Kunststoff. Kunststoffe dieser Art, beispielsweise auch Mehrkomponentenkunststoffe sind leicht zu handhaben und erfordern nur wenig Werkzeuge oder ähnliche Mittel.

Die Erfindung ist aber auch anwendbar, wenn die elastisch verformbare Masse aus Metall, beispielsweise in gießbarem Metall oder einer gießbaren Metallegierung besteht. Dabei können Metalle oder Metallegierungen mit verhältnismäßig niedrigem Schmelzpunkt Anwendung finden. Da die Seilkräft bei der Erfindung durch Pressung und dadurch durch Reibung übertragen werden, kommt den Festigkeitenwerten des betreffenden Materials nur eine untergeordnete Bedeutung zu.

Der Konus, der bei der Erfindung angewendet wird, ist vorzugsweise rotationssymmetrisch. Bei einer solchen Ausgestaltung ist bei Wegfall des Seilzuges eine Verdrehung des Konus gegenüber der konischen Bohrung möglich. Dies führt zu einer Verdrehung des Seiles, welche in manchen Fällen ohne Bedeutung, in anderen Fällen jedoch unerwünscht ist.

Soll eine Verdrehung des Seils sicher ausgeschlossen werden, empfiehlt es sich, daß der Konus bzw. die konische Bohrung zusammenwirkende Verdrehsicherungen aufweisen. Eine derartige Verdrehsicherung kann beispielsweise durch Schlüsselflächen gebildet sein. Auf dieser Weise wird es möglich, daß der Konus in der konischen Bohrung in Achsrichtung eine gewisse Beweglichkeit besitzt, daß jedoch eine Verdrehung ausgeschlossen ist.

Um sicherzustellen, daß bei der Herstellung des Konus - also beim Einfüllen der aushärtenden Masse in die konische Bohrung - die gewünschte Beweglichkeit des Konus gegenüber der Hülse erhalten wird, ist es günstig, wenn zwischen der Masse und der konischen Bohrung eine Antihaftbeschichtung angeordnet wird. Eine solche Antihaftbeschichtung oder Antiklebebeschichtung ist bei der Verwendung von Kunststoff ohne weiteres möglich. Wenn jedoch z. B. Zink zur Bildung des Konus benützt wird, ist anstelle von Kunststoff als Antiklebebeschichtung eine Antihaftbeschichtung zum Beispiel aus einem keramischen Material anzuwenden, damit nicht wegen der hohen Temperatur beim Ausgießvorgang eine unerwünschte Anhaftung erfolgt.

Die Hülse kann bei der Erfindung in ein Schloß eingesetzt sein. Ein derartiges Schloß besteht im wesentlichen aus einem Rohrstück entsprechender Länge mit einer Schlitzung entlang der Mantellinie, wobei die Schlitzung in der Breite in dem oberen Teil der Hülsenabmessung angepaßt ist, im unteren Teil dagegen dem Seildurchmesser. Auf diese Weise ist die Hülse sicher im Schloß gehalten und kann sich nicht unbeabsichtigt aushängen. Gegebenenfalls können auch zusätzlich Sicherungseinrichtungen vorgesehen sein.

Die Hülse ist im Schloß drehbar angeordnet, wenn eine Drehung der Hülse zugelassen werden kann. Wenn eine Drehung zu verhindern ist, um die Verdrehung vom Seil fernzuhalten, empfiehlt es sich, zwischen der Hülse und dem Schloß Verdrehsicherungen vorzusehen, beispielsweise dadurch, daß an der Hülse eine Nase angeformt ist, die in eine entsprechende Ausnehmung im Schloß eingreift.

In der Zeichnung ist ein Ausführungsbrief für die Erfindung schematisch dargestellt. Es zeigen:

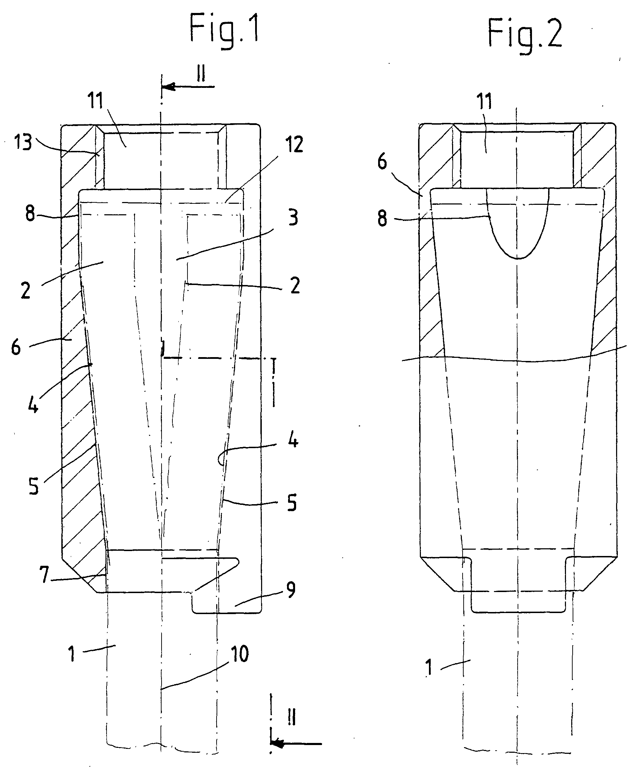

- Fig. 1: eine Ansicht teilweise im Schnitt einer auf einem Seilende angeordneten Hülse gemäß der Erfindung und
- Fig. 2: ein Schnitt bzw. eine Ansicht zur Darstellung der Fig. 1 entsprechend der Linie II-II.

Die Hülse 6 ist im wesentlichen rotationssymmetrisch ausgebildet. Es ist jedoch eine Nase 9 angeformt, die in eine entsprechende Ausnehmung eines Schlosses oder dergleichen eingreifen kann, so daß eine Drehbewegung zwischen Schloß und Hülse ausgeschlossen ist.

Die Hülse besitzt eine konische Bohrung 5, die den Konus 4 aufnimmt, der im wesentlichen aus der erhärtbaren Masse 3 besteht, welche im Gebrauchszustand eine gewisse Elastizität besitzt, so daß die Masse einen Preßdruck radial zur Mittelachse übertragen kann. Der unterste Bereich 7 ist mit einem Durchmesser ausgebildet und der dem Durchmesser des mit strichpunktierten Linien angedeuteten Drahtseils 1 angepaßt ist. Der Spitzenwinkel des Konus 4 beträgt vorzugsweise etwa 10°.

Der Konus 4 wird durch die Masse 3 gebildet und umschließt die etwas aufgedrehten Litzen 2 des Drahtseils 1.

Die Masse 3 ist durch die Öffnung 11 eingefüllt, und zwar in einer solchen Weise, daß die obere Begrenzung 12 von der Öffnung 11 einen kleinen Abstand aufweist. Die Öffnung 11 ist mit einem Innengewinde 13 versehen, so daß die konische Bohrung abgedichtet werden kann. Das Gewinde 13 kann auch zur Verbindung der Hülse 6 mit anderen Bauteilen verwendet werden.

Die konische Bohrung 5 besitzt zwei gegenüberliegende Schlüsselflächen 8, so daß sich der Konus 4 in der konischen Bohrung 5 nicht verdrehen kann.

Es ist klar, daß wegen des Abstandes der oberen Begrenzung 12 vom Innengewinde 13 bzw. einer anderen Begrenzung der konischen Bohrung 5 sich bei Entlastung des Zuges am Drahtseil 1 der Konus, also die Litzenenden mit der Masse 3 sich geringfügig in Richtung des größeren Durchmessers der konischen Bohrung 5 bewegen können. Bei wachsendem Seilzug ergibt sich jedoch ein erheblicher radialer Druck, der eine Trennung der Litzen 2 von der Einbettungsmasse 3 ausschließt.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Drahtseil mit mindestens einer an einem Ende geordneter, den Seilzug übertragenden Hülse, wobei die Litzen (2) des Drahtseils (1) etwas aufgedreht und im Gebrauchszustand in einer festen Masse (3) eingebettet sind, wobei die Masse (3) mit den Litzenenden einen Konus (4) bildet, der in einer angepaßten konischen Bohrung (5) der Hülse (6) angeordnet ist und wobei eine begrenzte axiale Beweglichkeit zwischen dem Konus und der Hülse gegeben und der Seilzug über die Konusfläche in die Hülse (6) eingeleitet ist.

2. Drahtseil mit Hülse nach Anspruch 1, **dadurch gekennzeichnet, daß** der kleinste Durchmesser der konischen Bohrung (5) dem Seildurchmesser entspricht.

3. Drahtseil mit Hülse nach einem oder beiden der vorhergehenden Ansprüche, **dadurch gekennzeichnet, daß** die Masse (3) ein Kunststoff, insbesondere ein aushärtbarer Kunststoff ist.

4. Drahtseil mit Hülse nach einem oder beiden der Ansprüche 1 bis 2 **dadurch gekennzeichnet, daß** die Masse (3) ein gießbares Metall bzw. eine gießbare Metallegierung ist.

5. Drahtseil mit Hülse nach einem oder mehreren der vorhergehenden Ansprüche **dadurch gekennzeichnet, daß** der Konus (4) rotationssymmetrisch ist.

6. Drahtseil mit Hülse nach einem oder mehreren der vorhergehenden Ansprüche **dadurch gekennzeichnet, daß** der Konus einen Spitzenwinkel von etwa 10° aufweist.

7. Drahtseil mit Hülse nach einem oder mehreren der vorhergehenden Ansprüche **dadurch gekennzeichnet, daß** der Konus (4) bzw. die konische Bohrung (5) zusammenwirkende Verdrehsicherungen (8) aufweisen.

8. Drahtseil mit Hülse nach einem oder mehreren der vorhergehenden Ansprüche **dadurch gekennzeichnet, daß** die Verdrehsicherung von Schlüsselflächen (8) gebildet ist.

9. Drahtseil mit Hülse nach einem oder mehreren der vorhergehenden Ansprüche **dadurch gekennzeichnet, daß** zwischen der Masse (3) und der konischen Bohrung (5) eine Antihaftbeschichtung angeordnet ist.

10. Drahtseil mit Hülse nach einem oder mehreren der vorhergehenden Ansprüche **dadurch gekennzeichnet, daß** die Hülse (3) in ein Schloß eingesetzt ist.

11. Drahtseil mit Hülse nach Anspruch 9 **dadurch gekennzeichnet, daß** die Hülse im Schloß drehbar angeordnet ist.

12. Drahtseil mit Hülse nach Anspruch 9 **dadurch gekennzeichnet, daß** zwischen Hülse (3) und dem Schloß Verdrehsicherungen angeordnet sind.
